Europäisches Patentamt

European Patent Office

Office européen des brevets

(11) Publication number: **0 145 116**
**A2**

(12) **EUROPEAN PATENT APPLICATION**

(21) Application number: **84305423.0**

(22) Date of filing: **09.08.84**

(51) Int. Cl.⁴: **G 06 F 7/68**
**G 06 F 15/68**

(30) Priority: **17.09.83 GB 8324950**

(43) Date of publication of application:
**19.06.85 Bulletin 85/25**

(84) Designated Contracting States:
**CH DE FR GB IT LI NL SE**

(71) Applicant: **EMI Limited**
**Blyth Road**
**Hayes Middlesex, UB3 1BP(GB)**

(72) Inventor: **Sloan, Robert Colin**
**Avoca Sheephouse Road**
**Maidenhead Berkshire(GB)**

(72) Inventor: **Voles, Roger**
**49, Park Road**
**Chiswick London, W4 3EY(GB)**

(74) Representative: **Marsh, Robin Geoffrey**
**Thorn EMI Patents Limited The Quadrangle Westmount**
**Centre Uxbridge Road**
**Hayes Middlesex, UB4 0HB(GB)**

(54) **Image processing.**

(57) An image processing system includes a plurality of electrical circuits arranged so as to generate a sum signal (ST) by accumulating a plurality of weighted data signals which are indicative of the intensity of e.m. radiation received by a detector, during successive time intervals, from a corresponding plurality of pixels in a scene relative to which the detector can move and each of which has been weighed by a respective amount in dependence on the relative position of the respective pixel. Each electrical circuit includes a binary rate multiplier (BRM) in which respective counter stages are driven jointly by a number of clock pulses indicative of the amplitude of an unweighted data signal, respective gates for gating the output $(\overline{Q1}...\overline{QN})$ of each counter stage with a respect bit of a binary number (BN) representing the weighting factor and a further gate for combining the gated outputs to generate the weighted data signal.

FIG.2

: 1 :

## IMAGE PROCESSING

This invention relates to an imaging system, and particularly to processing data in an imaging system.

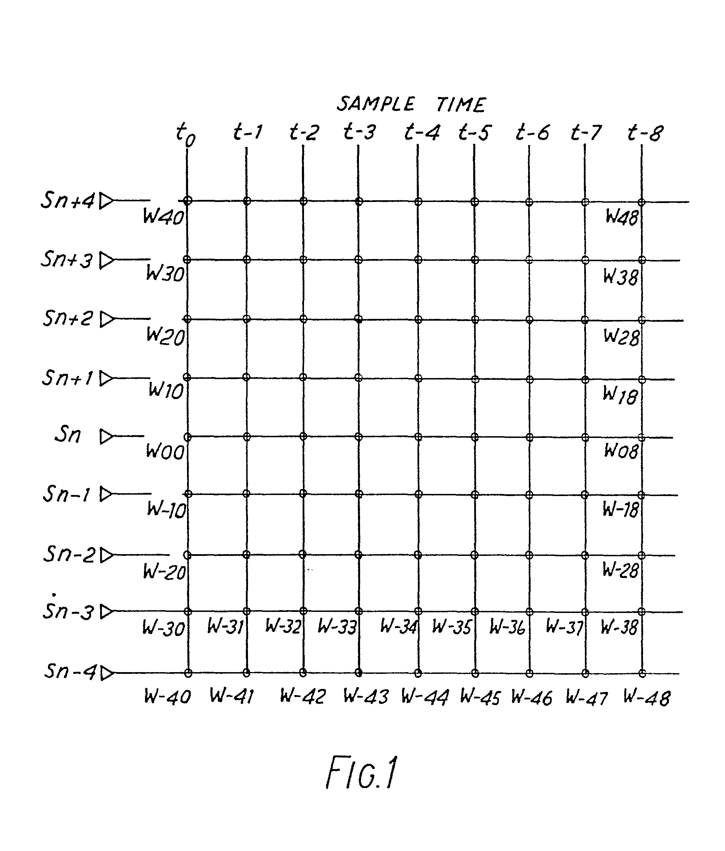

It is known that an imaging system operating, for example, at infra-red wavelength may comprise a linear array of detectors which is scanned across a scene typically, although not necessarily, in azimuth. It is possible to define the field of view of the array in terms of a number of overlapping, "sliding windows"; the width of each window corresponds typically to a number, p say, of successive positions of a column of pixels in the scene. In a typical example, each window may comprise a square matrix of 9 x 9 pixels. This is represented schematically in Figure 1 of the accompanying drawings, the initial position of a column of nine pixels being shown at a time $t_o$ and successive positions of the same column, due to its movement across the window, being shown at times $t-1......t-8$, respectively.

The array may comprise as many as 128 detectors, consecutive groups of nine detectors being used to develop respective windows. These groups overlap one another, pixel-by-pixel, so that corresponding windows overlap one another in the vertical direction.

It is frequently desirable to weight the amplitude of an output signal, corresponding to each pixel position in a window, by an appropriate weighting factor. The sum of these weighted signals then represents the intensity of radiation prevailing in the window. As illustrated in Figure 1, the weighting factor ascribed to a pixel is given by $W_{ry}$ where $r = -4, \ldots +4$ and represents the row in the window and $y = 0 \ldots 8$ and represents the column.

Assuming that the array comprises 128 detectors the processing described above, when applied to all windows, would involve about 10,000 multiplications and subsequent additions in respect of each new set of data samples, generated by the detector array. Since data samples are generated typically at $40 \mu s$ intervals processing systems used hitherto have proved to be relatively expensive and complex.

It is an object of the present invention to alleviate some of the above-described problems. In accordance with one aspect of the present invention there is provided an electrical circuit for applying a weighting factor to an electrical data signal thereby to generate a weighted data signal, the circuit being characterised by provision of a binary rate multiplier wherein respect counter stages are driven jointly by a number of clock pulses representing the amplitude of said electrical data signal, respective means for gating the output of each counter stage with a respective element of a binary number representing said weighting factor and means for combining the gated outputs to generate said weighted data signal.

In accordance with another aspect of the invention there is provided a data processing system including a data processing circuit suitable for generating a sum signal by accumulating a plurality weighted data signals which are indicative of the intensity of electromagnetic radiation received by a detector, during successive time intervals, from a corresponding plurality of pixels in a scene relative to which the detector can move, and each of which has been weighted by a respective amount in dependence on the position of the respective pixel in relation to the others of said plurality of pixels,

the processing circuit being characterised by provision of a corresponding plurality of electrical circuits, each as defined in the immediately preceding paragraph, arranged so as to weight, by respective said amounts an electrical signal representative of electromagnetic radiati received by said detector during a said time interval thereby to generate respective weighted data signals, and means for combining the weighted data signals, generated by said plurality of electrical circuits, during successive time intervals, in such a way as to produce said sum signal.

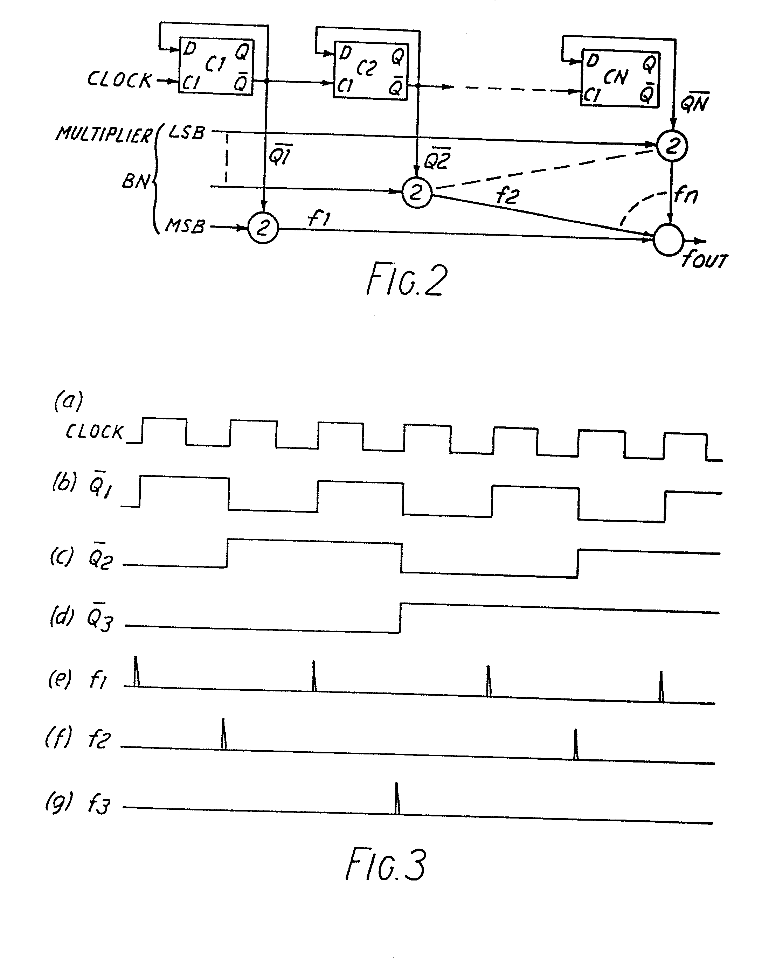

In order that the invention may be carried into effect an embodiment thereof is now described, by way of example only, by reference to the remaining drawings of which Figure 2 shows a binary rate multiplier (BRM) in block schematic form,

Figures 3a-3g show pulse diagrams useful in understanding operation of the binary rate multiplier of Figure 2.

Figure 4 shows in block schematic form a data processing circuit incorporating a number of BRMs,

Figure 5 shows a block diagram of a shifting accumulator used in the circuit of Figure 4,

Figures 6a and 6b show a plurality of interconnected processing circuits, each of the kind shown in Figure 4,

Figure 7a shows a digitising circuit useful in an embodiment of the present invention,

Figure 7b shows four ramp signals applied to the circuit of Figure 7a, and Figure 8 shows a modified form of the circuit shown in Figure 4.

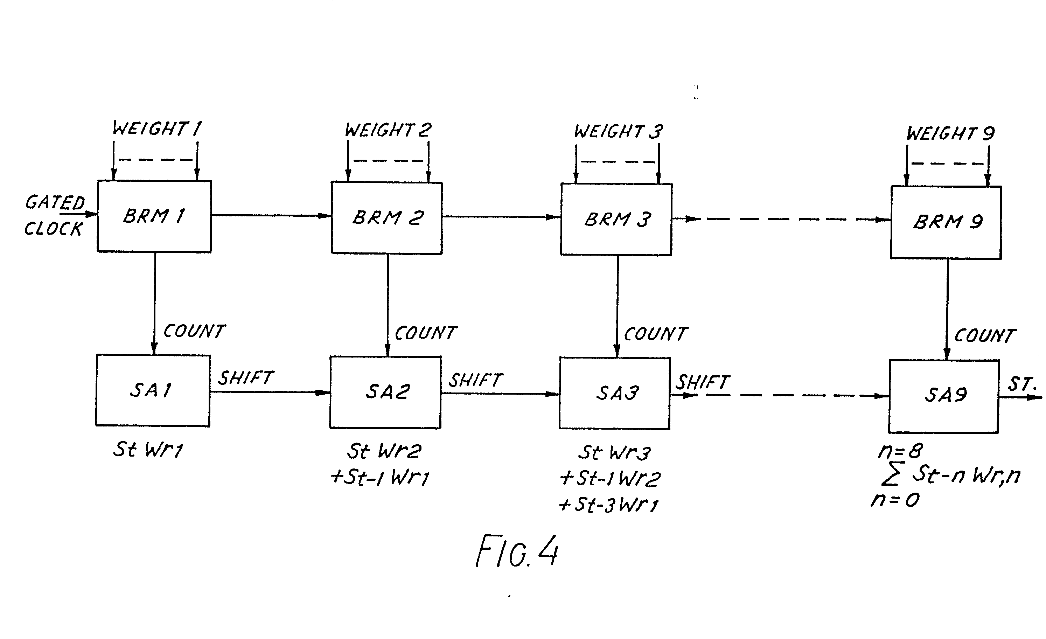

Figure 2 shows an N-stage binary rate multiplier. The counter stages C1, C2 .... CN are driven by clock pulses which, as shown in Figure 3a, are generated at a fixed rate. Pulse

trains $\overline{Q1}$ , $\overline{Q2}$ , $\overline{Q3}$ generated at the respective outputs of counter stages C1, C2 and C3 are shown, by way of example, in Figures 3b to 3d. The non-carry outputs, that is to say the rising edges, of these pulse trains are differentiated and gated by respective bits of a binary number BN, the most significant bit (MSB) being used to gate the pulse train $\overline{Q1}$ , generated in the fastest counting stage C1. The effect of gating in this way is to allow or inhibit respective series of pulses as shown, again by way of example, in Figures 3e to 3g, with repetition rates related in a binary sequence. When the gated pulses are combined the resultant pulse train, albeit irregular, has a mean pulse repetition frequency, averaged over a period corresponding to $2^N$ clock pulses, which is proportional to the product of the binary number and the clock rate.

In this invention the number of clock pulses used to drive the counter stages is arranged to represent the amplitude of an output signal corresponding to a pixel in the field of view of the array, and the weighting factor which is to be applied to this amplitude constitutes the binary number BN. The total number of pulses output from the binary rate multiplier, driven in this manner, is then proportional to the product of the amplitude of the output signal and the weighting factor.

This product is, of course, scaled by the length of the BRM since multiplication of two N-bit numbers will yield a product rounded to only the N most significant digits.

Since each detector generates an analogue output signal this must be digitised for input to a binary rate multiplier. Digitisation can be implemented conveniently by comparing the amplitude of the detector output signal with that of a linear ramp and by gating clock pulses to the counter until the two amplitudes are equal.

A pixel occurring in row r, say, of a window, and corresponding to a particular data sample, will occur in each of the nine columns, in turn, as new data samples are generated and a respective weight $W_{r0}$... $W_{r8}$ must be applied at each position. To obtain the instantaneous output signal, at time t say, of all samples in the row, however, it is necessary, in this example, to evaluate a summation of the form

$$\sum_{n=0}^{n=8} S_{t-n} W_{r, n+1}$$ where $S_t$ .... $S_{t-9}$ are the amplitudes corresponding to the last nine data samples of the detector.   In order to minimise hardware and provide the output sequencing of windows automatically, there' to effect this summation, nine separate BRMs, BRM1 .... BRM9, supplied from a common clock source are used with the products of each summed at appropriate points along a "pipelined" adder chain.

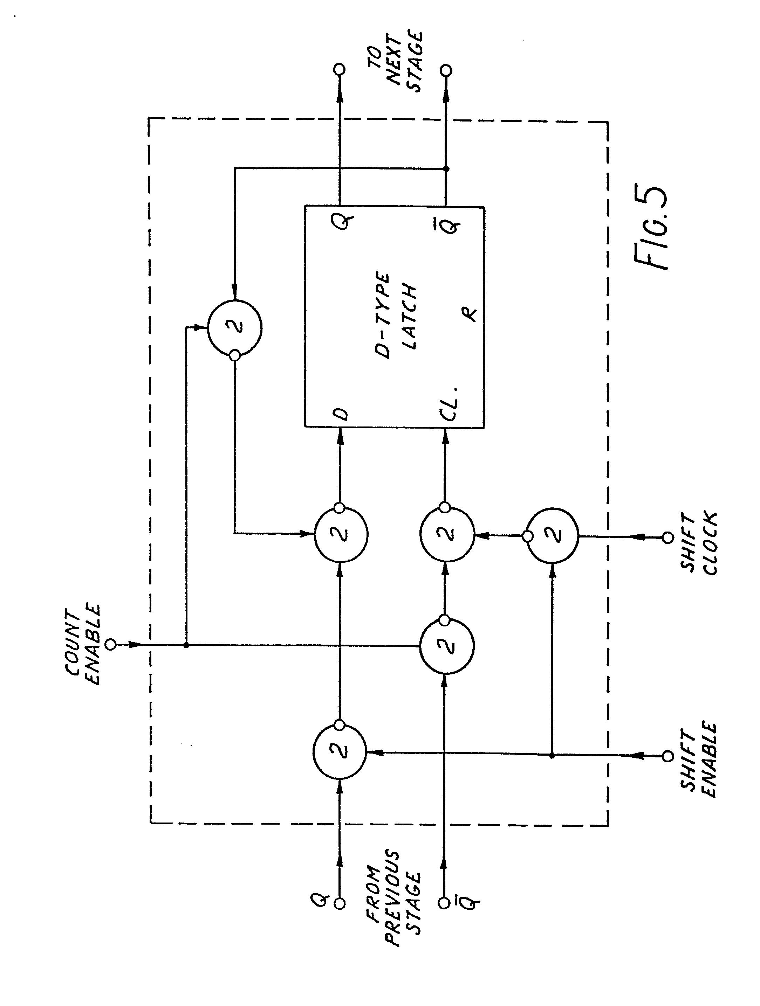

Addition is effected by gating pulse trains, generated by each BRM, sequentially into a respective counter.   In order to "pipeline" the process a circuit of the form shown, block schematically, in Figure 4 can be used. The blocks designated SA (shifting accumulator) function as separate counters to accumulate pulses from the respective BRMs during each digisation/multiplication period.   After each pixel has been processed these blocks function as a single shift register, serially transferring, as shown, each accumulated count to the next succeeding stage.   During this period, the last stage, SA9, will serially transfer the subtotal, ST, for the row for further processing.   A logic diagram cf a single stage of the shifting accumulator is shown in Figure 5.   This will be readily understood by persons skilled in the art, the symbols used having conventional meaning.

Because the windows overlap in the vertical direction each pixel in the field of view of the array will occur in different respective rows of nine consecutive windows, staggered in relation to one another in the vertical direction.   To further minimise processing time the procedure described in relation to Figure 4 is repeated, in parallel, for each row in a window to generate nine subtotals in respect of the same output signal. This entire procedure is repeated for each of the 128 detectors, again in parallel, so that the complete array can be processed in real time.

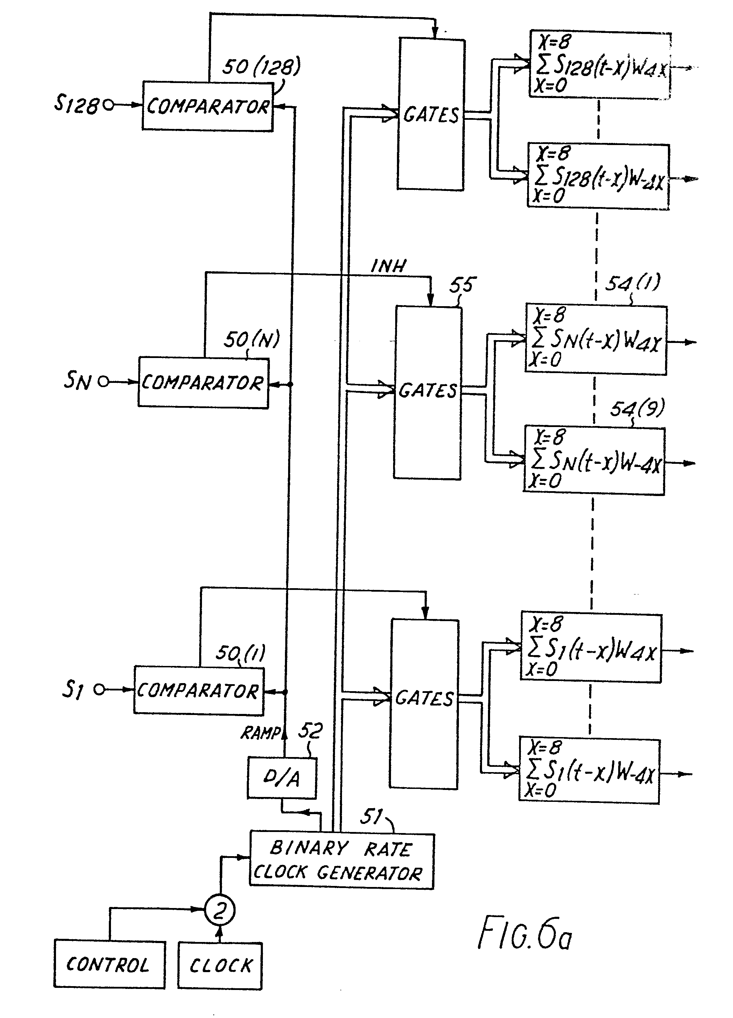

The 9 x 128 partial sums obtained in this way are summed in appropriate groups of 9 as shown in Figure 6b in order to obtain 120 summated outputs in respect of each data sampling period each summated output representing the summed amplitude of signals relating to the pixels forming respective windows. Processing can be implemented using adders and parallel, "pipelined" circuits, as shown in Figures 6a and 6b to achieve the required through put.

Referring to Figure 6a output signals S1 ... S128, generated at respective detectors in the array are applied to respective comparators 50(1) ... 50(128). A binary rate clock generator 51 produces clock pulses which are fed to a D/A conversion circuit 52. This circuit produces a linear ramp signal (RAMP) which is also applied to each comparator. When the amplitude of an output signal ($S_N$ say) equals that of the ramp signal an inhibit signal INH is generated which prevents the clock pulses, generated at 51, reaching respective data processing circuits 54(1) ...54(9) via a respective gate 55. As described hereinbefore the number of clock pulses able to reach the processing circuits, before inhibition, will represent the amplitude of the output signal SN.

Figure 6b shows, on an enlarged scale, the nine processing circuits 54(1) ... 54(9) corresponding to the $N^{th}$ detector. Each circuit is of the kind described already in relation to Figure 4 and comprises nine BRM's in association with a corresponding number of shift accumulators SA and a weight register WR.

The weight register for each processing circuit stores weighting factors $W_{r0}$ ... $W_{r8}$ for application to the respective BRMs in the circuit, the weighting factors in this case corresponding to a particular row r in the window. One of the nine outputs from shifter accumulators 54(1) ... 54(9) is selected for each of nine adjacent detector signals. The selected outputs are fed to respective registers $A_{N-14}$ ... $A_{N-4}$, the outputs being so chosen that the weighting factors corresponding to successive rows in the window being processed are applied respectively to the nine successive detector signals. These outputs are then summed to give the total amplitude of all signals relating to the pixels in the window. The summation may be carried out in stages for example as shown at 61, 61' and 62 in the circuit 60 of Figure 6b, in order to obtain a more rapid response than that of .single nine input adder.

The complete system can be constructed using the described circuits interconnected as shown in Figure 6. Using present-day capability the circuits can be fabricated using uncommitted logic arrays; the BRM chip comprising about 2500 gates and the output adder about 2000. Using arrays of 5000 gates enables two units to be accommodated on each chip, giving a total chip count of 636.

If the weighting factors can, in fact, be symmetrical about the horizontal and vertical axes the BRM gate count can be reduced to about 1600 and the number of BRM chips reduced from 9 to 5 per detector channel. This would reduce the total chip count to about 300.

Since each chip is a repetition of comparatively few simple cells it would be economic to produce an optimised cell layout instead of using arrays. This can typically reduce the area of a chip by a factor of 3 so the chip count would be reduced to about 140 using optimised cells.

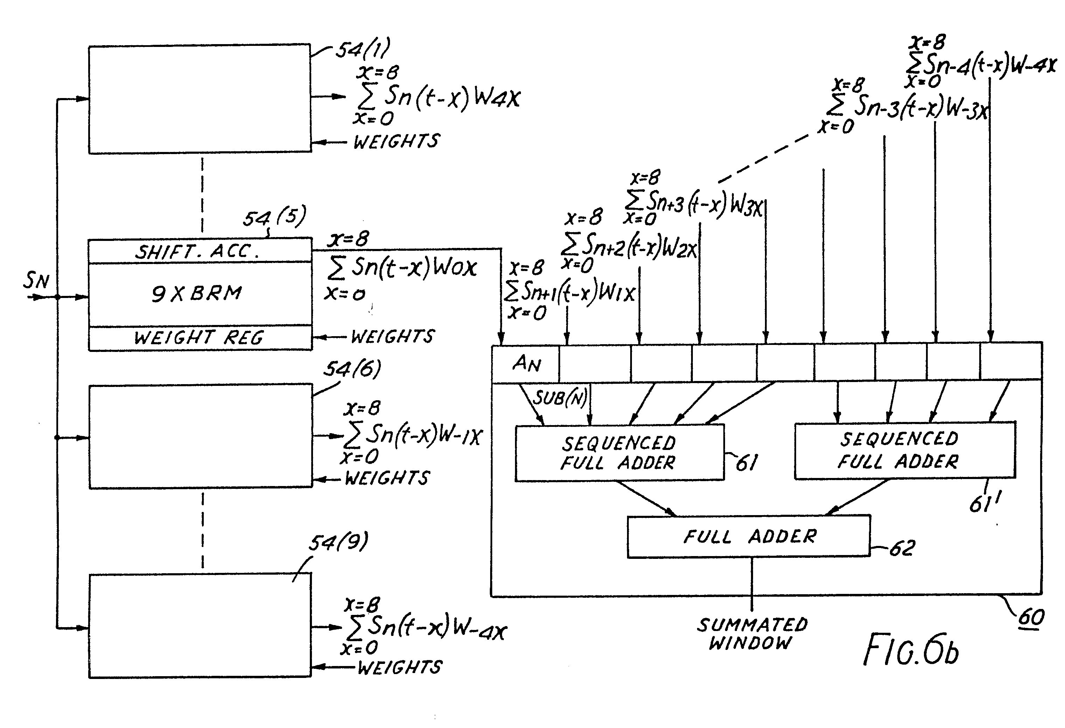

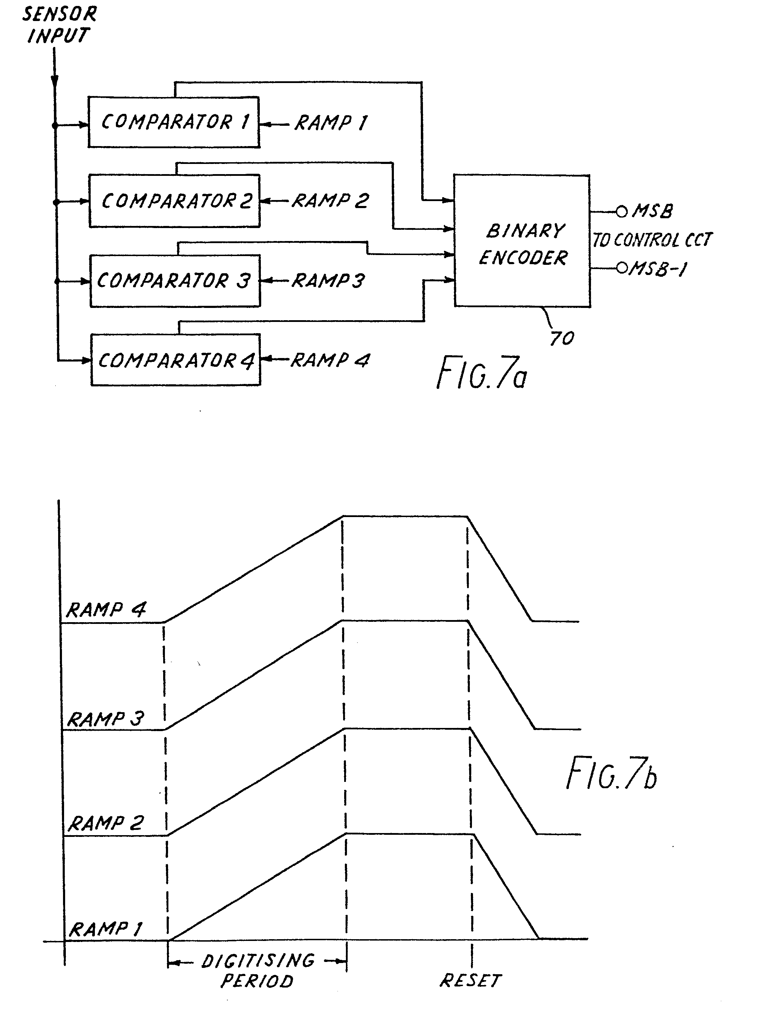

In an alternative embodiment it is possible to increase the resolution of the digitiser by adding additional comparators functioning as a coarse/fine system to extend the range without increasing the counting time. Figures 7a and 7b show an implementation for adding two more significant bits to the original system. In essence, the technique uses biassed ramps as shown in Figure 7b running between defined levels such that each finishes one bit below the level at which the next higher ramp started. The first comparator to change state during the digitising period determines the most significant bits (MSB, MSB-1) of the detector amplitude directly via a binary encoder

70 to which each comparator is connected, the scaled lower significant digits being determined by closing the BRM clock gate as before.

In order to incorporate the additional amplitude information, it is necessary to multiply the additional bits by the appropriate weight and add the product to the sum already contained in the shifting accumulator.

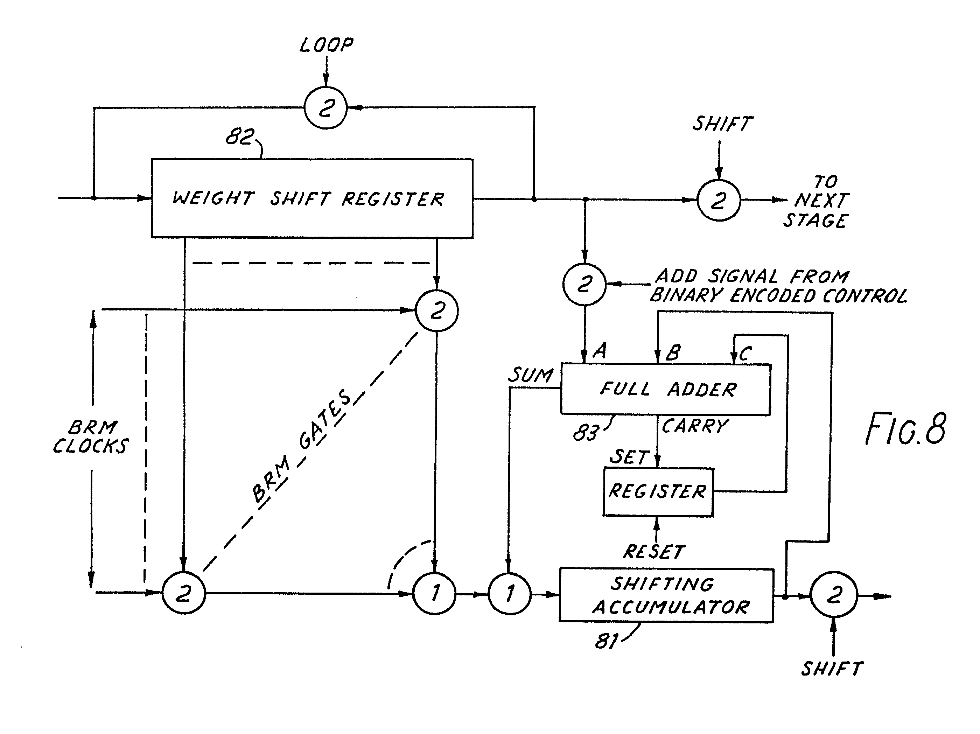

Figure 8 shows how this can be implemented. Both the shifting accumulator 81 and the weight register 82 are driven in accordance with a cyclical operation from LSB to MSB with their outputs combined in a full adder 83 which feeds the resulting total back into the shifting accumulator. This cyclical operation occurs twice with the weight data gated to the adder depending on whether the additional amplitude bits are '0' or '1'. With appropriate phasing between the two registers and an additional relative shift of one bit between cycles, this performs a conventional shift-and-add multiplication with the product added to the fine data.

The logic circuit of a stage in the shifting accumulator will need slight modification to reverse the direction of shift compared with that of increasing count.

Assuming that the common control circuits and pulse generators are external to the chip, the gate count will increase by about 7% for the BRM chip.

Although the above-described system is particularly suitable for pixel weighting, alternatively pixel data derived from an earlier or secondary scene could be used instead of using weighting factors. The same process of product summation would then enable the system to function as an auto or cross-correlator. Such an arrangement may need slight modification, apparent to persons skilled in the art, to the control circuitry to enable rapid changes of the "weight register" data but would not require any modification of the basic concept.

## CLAIMS

1. An electrical circuit for applying a weighting factor to an electrical data signal thereby to generate a weighted data signal, the circuit being characterised by provision of a binary rate multiplier wherein respect counter stages (C1 C2 ..CN) are driven jointly by a number of clock pulse representing the amplitude of said electrical data signal, respective means for

gating the output ($\overline{Q1}$ ... $\overline{QN}$) of each counter stage with a respective element of a binary number (BN) representing said weighting factor and means for combining the gated outputs to generate said weighted data signal.

2. An electrical circuit according to Claim 1 including means for generating clock pulses, means for comparing the amplitude of said electrical data signal with a ramp voltage and means for allowing or preventing transmission of clock pulses to the binary rate multiplier in dependence on the comparison.

3. An electrical circuit according to Claim 2 including a plurality of means for comparing simultaneously the amplitude of said electrical data signal with respect ramp voltages spanning different voltage ranges.

4. A data processing system including a data processing circuit suitable for generating a sum signal (ST) by accumulating a plurality weighted data signals which are indicative of the intensity of electromagnetic radiation received by a detector, during successive time intervals, from a corresponding plurality of pixels in a scene relative to which the detector can move, and each of which has been weighted by a respective amount in dependence on the position of the respective pixel in relation to the others of said plurality of pixels,

the processing circuit being characterised by provision of a corresponding plurality of electrical circuits, each according to Claim 1, arranged so as to weight, by respective said amounts an electrical signal representative of electromagnetic radiation received by said detector during a said time interval thereby to generate respective weighted data signals, and means for combining the weighted data signals, generated by said plurality of electrical circuits, during successive time intervals, in such a way as to produce said sum signal.

5. A data processing system according to Claim 4 wherein the combining means comprises a plurality of shifting circuits (SA1...SA9) each associated with a respective said electrical circuit, wherein the shifting circuits are connected electrically together so as to accumulate progressively said plurality of weighted data signals indicative of the intensity of radiation received by said detector, during successive time intervals, from said corresponding plurality of pixels thereby to produce said sum signal (ST).

6. A data processing system according to Claim 4 or Claim 5 including a respective corresponding plurality of said data processing circuits (54(1)...54(9)) associated with each of an array of detectors (S1...S128), and further means (66) for combining sum signals, generated by the data processing circuits thereby to produce a further sum signal indicative of the intensity of electromagnetic radiation received, during sucessive time intervals, from a matrix of pixels in the scene.

7. A data processing system according to Claim 6 wherein said further combining means (60) is arranged to combine, in turn, sum signals generated by different groups selected from all the data processing circuits with which the array of detectors is associated.

8. _A data processing system according to Claim 7 wherein said further combining means (60) is arranged to combine, in turn, sum signals generated by each said corresponding plurality of data processing circuits.

9. An imaging system including a linear array of detectors and a data processing system according to any one of Claims 6 to 8.

FIG.1

FIG.2

(a) CLOCK

(b) $\bar{Q}_1$

(c) $\bar{Q}_2$

(d) $\bar{Q}_3$

(e) $f_1$

(f) $f_2$

(g) $f_3$

FIG.3

FIG.4

0145116

0145116

FIG.5

FIG.6a

FIG.6b

6/8

0145116

0145116

SENSOR
INPUT

COMPARATOR 1 ← RAMP 1

COMPARATOR 2 ← RAMP 2

COMPARATOR 3 ← RAMP 3

COMPARATOR 4 ← RAMP 4

BINARY
ENCODER

○ MSB
TO CONTROL CCT
○ MSB-1

70

FIG.7a

RAMP 4

RAMP 3

RAMP 2

RAMP 1

FIG.7b

DIGITISING
PERIOD

RESET

FIG.8